# EUROPÄISCHE PATENTSCHRIFT

(11) **EP 0 447 625 B1**
(45) Veröffentlichungstag und Bekanntmachung des Hinweises auf die Patenterteilung: **05.01.1994**
(21) Anmeldenummer: 90122249.7
(22) Anmeldetag: 22.11.1990
(51) Int. Cl.: B60K 11/08, B62D 35/00

(54) **Kraftfahrzeug, insbesondere Personenwagen mit einer im Heckbereich angeordneten Luftleitvorrichtung**
Motor vehicle, in particular a car, with an air intake positioned at the rear
Véhicule, en particulier voiture particulière, avec un dispositif de prise d'air agencé sur la partie arrière

(30) Priorität: 23.03.1990 DE 4009385
(43) Veröffentlichungstag der Anmeldung: 25.09.1991
(73) Patentinhaber: Dr.Ing.h.c. F. Porsche Aktiengesellschaft, 70435 Stuttgart (DE)
(72) Erfinder: Brin, Constantin, Dipl.-Ing., W-7000 Stuttgart 30 (DE); Durm, Jürgen, Dipl.-Ing., W-7130 Mühlacker (DE)

(56) Entgegenhaltungen:
- EP-A- 0 226 778
- EP-A- 0 312 709
- DE-A- 3 615 584
- US-A- 4 756 568

## Beschreibung

Die Erfindung betrifft ein Kraftfahrzeug, insbesondere einen Personenwagen mit einer im Heckbereich angeordneten Luftleitvorrichtung gemäß dem Oberbegriff des Patentanspruchs 1.

Eine Luftleitvorrichtung der eingangs genannten Gattung ist aus der DE-A-3 615 584 bekannt und weist eine gute Funktion auf.

Aufgabe der Erfindung ist es, eine Luftleitvorrichtung gemäß der DE-A-3 615 584 so weiterzubilden, daß die Luftleitvorrichtung bei einfachem Aufbau in der ausgefahrenen Betriebsstellung noch weiter nach hinten bewegbar ist, so daß ein größerer Einströmquerschnitt für die zur Kühlung der Brennkraftmaschine erforderliche Kühlluft geschaffen wird. Ferner soll durch die Luftleitvorrichtung eine Reduzierung des Luftwiderstandsbeiwertes erzielt werden.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß sich die aus zwei gelenkig miteinander verbundenen Teilen bestehende Luftleitvorrichtung in ihrer ausgefahrenen Betriebsstellung bei einfachem Aufbau relativ weit nach hinten bzw. oben bewegen läßt, so daß einerseits eine großflächige Einströmöffnung für die Kühlluft zur Kühlung der heckseitigen, luftgekühlten Brennkraftmaschine geschaffen wird und andererseits eine weit hintenliegende Abrißkante für den das Fahrzeug überstreichenden Luftstrom erzielt wird, wodurch ein guter CW-Wert erreicht wird.

Das hintenliegende Teil der Luftleitvorrichtung wirkt beim Aus- und Einfahren der Luftleitvorrichtung als Lenker der Verstelleinrichtung und bildet zugleich eine querverlaufende Abschottung zwischen dem horizontal ausgerichteten vorderen Teil der Luftleitvorrichtung und dem darunterliegenden Aufbau, so daß keine Abgase oder Schmutzpartikel vom heckseitig angeordneten Gebläse angesaugt werden können.

In der eingefahrenen Ruhestellung verlaufen beide Teile der Luftleitvorrichtung außenhautbündig zum angrenzenden Aufbau und bilden eine stylistische Einheit mit dem Aufbau. Die Luftleitvorrichtung und die Verstelleinrichtung bestehen aus wenigen Bauteilen (einfacher Aufbau) und sind einfach herstellbar.

Ein Ausführungsbeispiel der Erfindung ist in der Zeichnung dargestellt und wird im folgenden näher beschrieben.

Es zeigt:
- Fig. 1: eine Schrägansicht von hinten auf einen Personenwagen mit einer im Heckbereich angeordneten Luftleitvorrichtung in eingefahrener Ruhestellung,
- Fig. 2: eine Schrägansicht von hinten entsprechend Fig. 1 mit ausgefahrener Luftleitvorrichtung,
- Fig. 3: eine Teilseitenansicht auf den Heckbereich des Personenwagens mit der erfindungsgemäßen Luftleitvorrichtung,
- Fig. 4: eine perspektivische Ansicht von schräg hinten auf eine Heckhaube des Personenwagens mit der ausgefahrenen Luftleitvorrichtung,
- Fig. 5: eine Explosionszeichnung der die Luftleitvorrichtung bildenden Bauteile, der Verstelleinrichtung und der angrenzenden Aufbauteile.

Der Personenwagen 1 umfaßt einen Aufbau 2 mit einer im Heckbereich 3 angeordneten Luftleitvorrichtung 4, die mittels einer Verstelleinrichtung 5 von einer bündig mit dem angrenzenden Aufbau 2 verlaufenden Ruhestellung A über Zwischenstellungen in eine ausgefahrene Betriebsstellung B bewegbar ist und umgekehrt. Durch die Luftleitvorrichtung 4 wird einerseits der Luftwiderstandsbeiwert des Personenwagens 1 herabgesetzt und andererseits im Fahrbetrieb der dynamische Hinterraddruck vergrößert (Abtrieb).

Im Heckbereich 3 setzt sich der Aufbau 2 aus einer Heckscheibe 6, einem Stoßfänger 7, einer Leuchteneinheit 8 und einer Heckhaube 9 zusammen. Die Heckhaube 9 ist an ihrem obenliegenden Endbereich unter Vermittlung von nicht näher gezeigten Scharnieren schwenkbar am Aufbau 2 gelagert und grenzt seitlich an Seitenteile 10 des Aufbaus 2 an.

Ein untenliegender Rand der Heckhaube 9 verläuft benachbart der Leuchteneinheit 8.

Die Heckhaube 9 weist eine Öffnung 11 auf, in die die Luftleitvorrichtung 4 eingesetzt ist. Die Öffnung 11 ist umfangsseitig von einem Rahmen 12 der Heckhaube 9 umgeben. Unterhalb der Heckhaube 9 ist eine luftgekühlte Brennkraftmaschine 13 angedeutet, der über ein nicht näher dargestelltes Gebläse Kühlluft zugeführt wird.

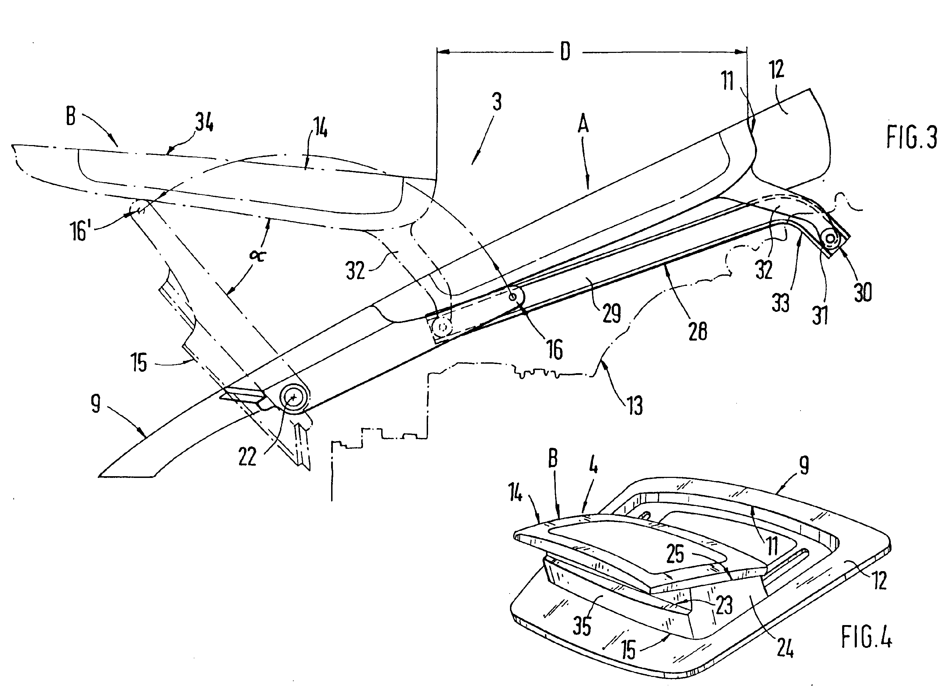

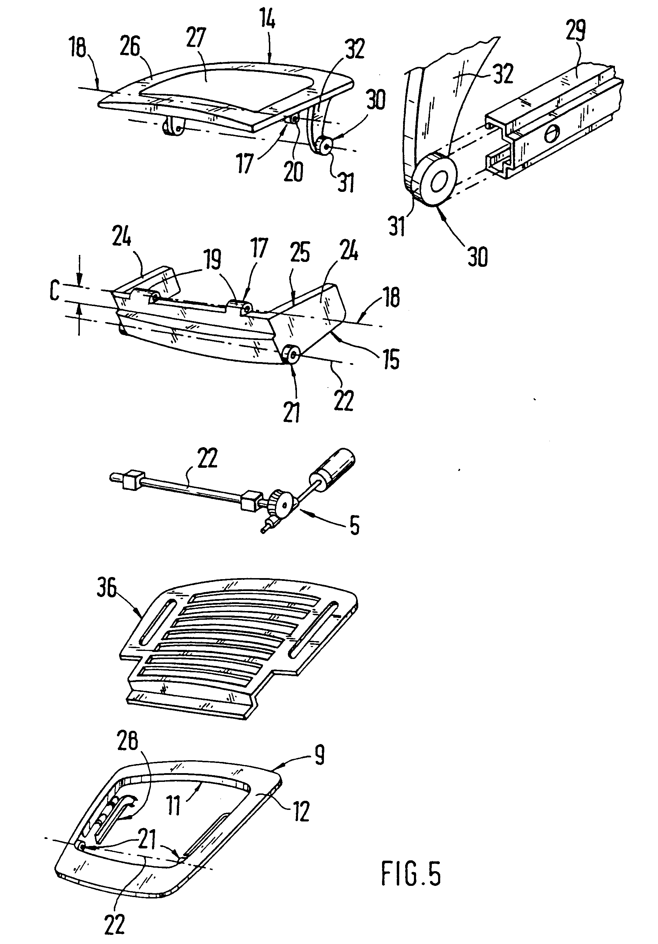

Die Luftleitvorrichtung 4 setzt sich aus zwei hintereinanderliegend angeordneten Teilen 14, 15 zusammen, die in der Ruhestellung A außenhautbündig mit der Kontur des fließheckartig gestalteten Heckbereichs 3 verlaufen, d.h., die beiden Teile 14, 15, der sie umgebende Rahmen 12 und angrenzende Abschnitte des Aufbaus 2 verlaufen außenhautseitig in einer gemeinsamen Ebene. Die beiden Teile 14, 15 der Luftleitvorrichtung 4 stellen relativ großflächige außenhautbündige Abschnitte der Heckhaube 9 dar und sind bei 16 gelenkig miteinander verbunden. Dies erfolgt gemäß den Fig. 3 und 5 durch ein Scharnier 17, wobei eine Scharnierachse 18 horizontal ausgerichtet ist und sich in Fahrzeugquerrichtung erstreckt. Das Scharnier 17 umfaßt Scharnierhälften 19, 20, wobei die Scharnierhälften 19 dem ersten Teil 15 und die Scharnierhälften 20 dem anderen Teil 14 zugeordnet sind.

Das dem Stoßfänger 7 zugewandte hintenliegende erste Teil 15 der Luftleitvorrichtung 4 ist an seinem freien untenliegenden Ende 21 um eine ortsfeste Drehachse 22 schwenkbar gelagert, wobei die Drehachse 22 horizontal ausgerichtet ist und in Fahrzeugquerrichtung verläuft. Im Ausführungsbeispiel ist das Teil 15 bei 21 drehbar am Rahmen 12 der Heckhaube 9 angelenkt. Die Verstellvorrichtung 5 zum Ausstellen und Einfahren der Luftleitvorrichtung 4 greift an der Drehachse 22 an. Das hintenliegende erste Teil 15 untergreift das vordere andere Teil 14 der Luftleitvorrichtung 4 abschnittsweise (Maß C). Aus diesem Grunde ist am hintenliegenden ersten Teil 15 eine stufenförmige Abstellung 23 vorgesehen. Ferner weist das hintenliegende ersten Teil 15 an seinen beiden außenliegenden Längsseiten sich in Fahrzeuglängsrichtung erstreckende Seitenabschnitte 24 auf, die sich in Betriebsstellung B der Luftleitvorrichtung 4 vom untenliegenden Aufbau 2 bis zum anderen Teil 14 der Luftleitvorrichtung 4 erstrecken und seitliche Spalte verschließen. Eine obere Begrenzungsfläche 25 der Seitenabschnitte 24 dient als Auflagefläche für das vordere andere Teil 14 der Luftleitvorrichtung 4 und definiert die ausgefahrene Betriebsstellung B der Luftleitvorrichtung 4.

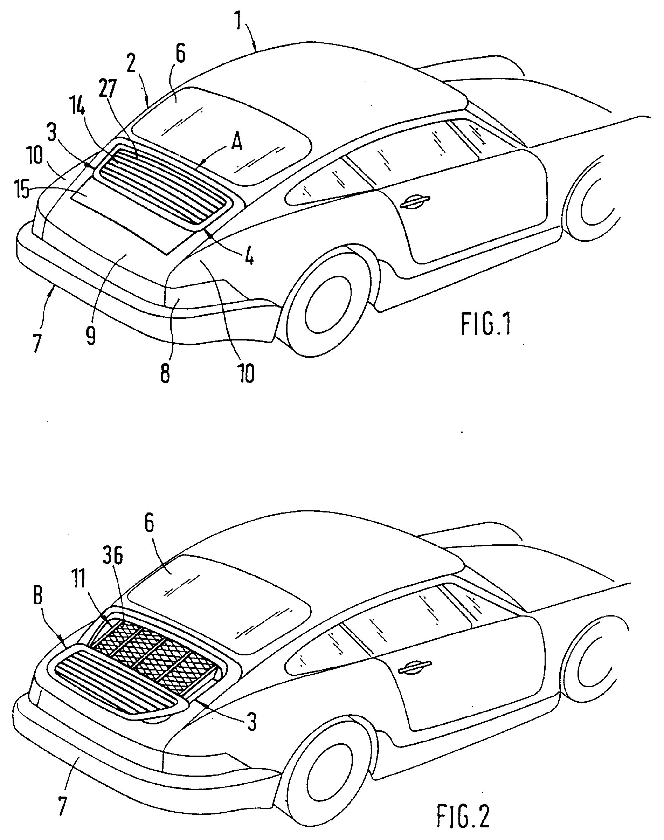

Das etwas großflächigere vordere andere Teil 14 der Luftleitvorrichtung 4 besteht aus einem äußeren umfangsseitigen Rahmenteil 26 und einem innenliegenden Lufteinlaßgitter 27, das mehrere Querstreben besitzt (Fig. 1 und 2). Ferner ist das andere Teil 14 in einer aufbauseitigen Führungseinrichtung 28 verschiebbar geführt, so daß beim Ausstellen der Luftleitvorrichtung 4 eine definierte Bewegung der beiden Teile 14, 15 erfolgt.

Die Führungseinrichtung 28 umfaßt zumindest eine aufbauseitig angeordnete Führungsschiene 29, die mit einem Gleitkörper 30 des anderen Teils 14 zusammenwirkt. Die Führungsschiene 29 weist einen U-förmigen oder C-förmigen Querschnitt auf und ist gemäß Fig. 5 vorzugsweise an beiden Längsseiten des Rahmens 12 angeordnet. Die Führungsschienen 29 erstrecken sich entlang von seitlichen Bereichen des Rahmens 12 und zwar auf der der Öffnung 11 zugekehrten Seite. Der Gleitkörper 30 ist im Ausführungsbeispiel als drehbare Rolle 31 ausgebildet, die endseitig an einem nach unten abgestellten Arm 32 des anderen Teils 14 angebracht ist. Die Arme 32 sind in einem vorneliegenden Bereich des anderen Teils 14 angeformt. Gemäß Fig. 3 weist die Führungsschiene 29 einen nach unten gerichteten gebogenen Endbereich 33 auf, in dem sich die Rolle 31 in Ruhestellung A der Luftleitvorrichtung 4 befindet.

Es besteht auch die Möglichkeit, daß die Führungseinrichtung 28 durch einen aufbauseitig vorgesehenen Längsschlitz gebildet wird, in dem ein seitlich abgestellter Zapfen des anderen Teils 14 eingreift.

Beim Ausfahren der Luftleitvorrichtung 4, das selbsttätig ab einer definierten Geschwindigkeit erfolgt, wird das erste Teil 15 mittels der Verstelleinrichtung 5 um die ortsfeste Drehachse 22 im Uhrzeigersinn verschwenkt. Die Drehachse 16 bewegt sich dabei auf einem Kreisbogen nach oben bzw. hinten in die Stellung (16'). Gleichzeitig führt das vordere andere Teil 14 über die Führungseinrichtung 28 bzw. das Scharnier 16 eine Bewegung nach hinten und oben aus, bis es die Betriebsstellung B einnimmt.

In der ausgefahrenen Betriebsstellung B ist die obenliegende Anströmfläche 34 des anderen Teils 14 etwa horizontal ausgerichtet oder leicht nach oben hin angestellt. Das andere Teil 14 ist ferner in der Betriebsstellung B um das Maß D nach hinten verschoben.

Der querverlaufende hintere Abschnitt 35 und die beiden Seitenabschnitte 24 des ersten Teils 15 bilden dabei eine durchgehende Wand zwischen dem Aufbau 2 und dem anderen Teil 14, so daß keine Auspuffgase bzw. Schmutzpartikel durch das Gebläse angesaugt werden können.

In die Öffnung 11 der Heckhaube 9 ist unterhalb der Luftleitvorrichtung 4 ein feinmaschiges Gitter 36 eingesetzt, das jedoch nur bei ausgefahrener Luftleitvorrichtung 4 sichtbar ist. Dieses Gitter 36 soll vermeiden, daß größere Partikel durch das Gebläse angesaugt werden können.

Der wesentliche Vorteil dieser zweiteiligen Luftleitvorrichtung 4 besteht darin, daß neben einer einfachen Kinematik durch den großen Verschiebeweg D - in Fahrzeuglängsrichtung - eine weit hintenliegende Luftabrißkante erzielt wird (guter CW-Wert) und daß bei ausgefahrener Luftleitvorrichtung 4 die Brennkraftmaschine ausreichend mit Kühlluft versorgt wird, da eine große Kühllufteintrittsfläche zu Verfügung steht. In der Betriebsstellung werden die beiden Teile 14, 15 gemäß Fig. 3 zusammengefaltet und verlaufen unter einem Winkel α zueinander.

## Patentansprüche

1. Kraftfahrzeug, insbesondere Personenwagen, mit einer im Heckbereich angeordneten Luftleitvorrichtung (4), die mittels einer Verstelleinrichtung (5) von einer eingefahrenen Ruhestellung (A) in eine ausgefahrene mit Abstand zum darunterliegenden Aufbau (2) verlaufende Betriebsstellung (B) bewegbar ist und umgekehrt, **dadurch gekennzeichnet,** daß sich die Luftleitvorrichtung (4) in der eingefahrenen Ruhestellung (A) aus zwei - in Fahrzeuglangsrichtung gesehen - hintereinanderliegend angeordneten, gelenkig miteinander verbundenen Teilen (14, 15) zusammensetzt, die zumindest abschnittsweise außenhautbündig zu den angrenzenden Aufbauteilen (2, 12) verlaufen, wobei das - in Fahrtrichtung gesehen hintenliegende erste Teil (15) an seinem freien untenliegenden Ende (21) um eine ortsfeste Drehachse (22) schwenkbar ist, wogegen das andere Teil (14) der Luftleitvorrichtung (4) in einer aufbauseitig angeordneten, längsverlaufenden Führungseinrichtung (28) verschiebbar gelagert ist, und daß in der ausgefahrenen Betriebsstellung (B) das nach oben und hinten hin bewegte andere Teil (14) auf dem nach hinten verschwenkten ersten Teil (15) aufliegt, wobei sich das andere Teil (14) an einer oberen Begrenzungsfläche (25) von Seitenabschnitten (24) des ersten Teils (15) abstützt.

2. Kraftfahrzeug nach Anspruch 1, **dadurch gekennzeichnet,** daß die beiden Teile (14, 15) relativ großflächige außenhautbündige Abschnitte einer Heckhaube (9) bilden.

3. Kraftfahrzeug nach Anspruch 1, **dadurch gekennzeichnet,** daß die beiden Teile (14, 15) umlaufend von einem Rahmen (12) der Heckhaube (9) umgeben sind.

4. Kraftfahrzeug nach Anspruch 1, **dadurch gekennzeichnet,** daß das der Heckscheibe (6) zugekehrte andere Teil (14) der Luftleitvorrichtung (4) ein Lufteinlaßgitter (27) mit mehreren Querstreben aufweist.

5. Kraftfahrzeug nach Anspruch 1, **dadurch gekennzeichnet**, daß das hintenliegende erste Teil (15) aus einem querverlaufenden Abschnitt (35) und zwei seitlich außenliegenden, sich in Fahrzeuglängsrichtung erstreckenden Seitenabschnitten (24) besteht, wobei die Seitenabschnitte (24) so gestaltet sind, daß sie als Auslagefläche für das vordere Teil (14) in der ausgefahrenen Betriebsstellung (B) dienen und die Betriebsstellung (B) festlegen.

6. Kraftfahrzeug nach Anspruch 1, **dadurch gekennzeichnet,** daß das hintenliegende erste Teil (15) der Luftleitvorrichtung (4) das vordere Teil (14) abschnittsweise untergreift.

7. Kraftfahrzeug nach Anspruch 1, **dadurch gekennzeichnet,** daß der das vordere Teil (14) untergreifende Abschnitt des ersten Teils (15) durch eine stufenförmige Abstellung (23) gebildet wird.

8. Kraftfahrzeug nach den Ansprüchen 1 und 3, **dadurch** **gekennzeichnet,** daß das hintenliegende erste Teil (15) der Luftleitvorrichtung (4) über eine horizontal ausgerichtete, in Fahrzeugquerrichtung verlaufende Drehachse (22) mit dem angrenzenden Aufbau (2) (Rahmen 12) verbunden ist.

9. Kraftfahrzeug nach Anspruch 8, **dadurch gekennzeichnet,** daß an der Drehachse (22) die Verstelleinrichtung (5) der Luftleitvorrichtung (4) angreift.

10. Kraftfahrzeug nach Anspruch 1, **dadurch gekennzeichnet,** daß die Führungseinrichtung (28) für das vordere Teil (14) durch zumindest eine aufbauseitig feststehende Führungsschiene (29) gebildet wird, in der ein Gleitkörper (30) des vorderen Teils (14) der Luftleitvorrichtung (4) verschiebbar gelagert ist.

11. Kraftfahrzeug nach Anspruch 10, **dadurch gekennzeichnet,** daß die in Fahrzeuglängsrichtung verlaufende Führungsschiene (29) einen U- oder C-förmigen Querschnitt aufweist.

12. Kraftfahrzeug nach Anspruch 10, **dadurch gekennzeichnet,** daß der Gleitkörper (30) durch eine drehbare Rolle (31) gebildet wird.

13. Kraftfahrzeug nach Anspruch 12, **dadurch gekennzeichnet,** daß die drehbare Rolle (31) am untenliegenden Ende eines abgestellten Armes (32) des vorderen Teils (14) angeordnet ist.

14. Kraftfahrzeug nach Anspruch 13, **dadurch gekennzeichnet,** daß die abgestellten Arme (32) in einem vorderne, seitlichen außenliegenden Bereich des Teils (14) vorgesehen sind.

15. Kraftfahrzeug nach den Ansprüchen 10 und 11, **dadurch** **gekennzeichnet,** daß die Führungsschiene (29) einen radienförmig nach unten gebogenen vorderen Endbereich (33) aufweist, in dem sich der Gleitkörper (30) bei eingefahrener Ruhestellung (A) der Luftleitvorrichtung (4) befindet.

16. Kraftfahrzeug nach den Ansprüchen 1 und 10, **dadurch** **gekennzeichnet,** daß an beiden Langsseiten der Luftleitvorrichtung (4) eine Führungseinrichtung (28) vorgesehen ist.

17. Kraftfahrzeug nach Anspruch 1, **dadurch gekennzeichnet,** daß die Führungseinrichtung (28) durch eine aufbauseitige angeordnete längliche Schlitzöffnung gebildet wird, in die ein in Querrichtung verlaufender abgestellten Stift des Teils (14) eingreift.

## Claims

1. A motor vehicle, in particular a passenger car, with a spoiler device (4) arranged in the tail region and movable by means of a displacement device (4) from a retracted rest position (A) into an extended operating position (B) extending at a distance from the body (2) lying thereunder, and *vice versa,* **characterized in that** in the retracted rest position (A) the spoiler device (4) comprises two parts (14, 15) arranged one behind the other as viewed in the longitudinal direction of the vehicle and connected to each other in an articulated manner and extending at least in part flush with the outer skin of the adjacent body parts (2, 12), wherein the first part (15) lying towards the rear as viewed in the direction of travel is pivotable at its free underlying end (21) about a fixed axis of rotation (22), whereas the other part (14) of the spoiler device (4) is mounted displaceably in a longitudinally extending guide device (28) arranged on the body, and in the extended operating position (B) the other part (14) moved upwards and towards the rear rests on the first part (15) pivoted towards the rear, the other part (14) being supported on an upper boundary face (25) of lateral portions (24) of the first part (15).

2. A motor vehicle according to Claim 1, **characterized in that** the two parts (14, 15) form portions of a tail cover (9) which have a relatively large area and are flush with the outer skin.

3. A motor vehicle according to Claim 1, **characterized in that** the two parts (14, 15) are surrounded on all sides by a frame (12) of the tail cover (9).

4. A motor vehicle according to Claim 1, **characterized in that** the other part (14) of the spoiler device (4) facing the tail cover (6) comprises an air-intake grille (27) with a plurality of transverse struts.

5. A motor vehicle according to Claim 1, **characterized in that** the first part (15) lying towards the rear comprises a transversely extending portion (35) and two side portions (24) situated laterally on the outside and extending in the longitudinal direction of the vehicle, wherein the side portions (24) are arranged in such a way that they act as an abutment face for the forward part (14) in the extended operating position (B) and define the operating position (B).

6. A motor vehicle according to Claim 1, **characterized in that** the first part (15) of the spoiler device (4) towards the rear engages in part under the forward part (14).

7. A motor vehicle according to Claim 1, **characterized in that** the portion of the first part (15) engaging under the forward part (14) is formed by a stepped projection (23).

8. A motor vehicle according to Claims 1 and 3, **characterized in that** the first part (15) of the spoiler device (4) lying towards the rear is connected to the adjacent body (2) (frame 12) through a horizontally orientated axis of rotation (22) extending in the transverse direction of the vehicle.

9. A motor vehicle according to Claim 8, **characterized in that** the displacement device (5) of the spoiler device (4) engages on the axis of rotation (22).

10. A motor vehicle according to Claim 1, **characterized in that** the guide device (28) for the forward part (14) is formed by at least one guide rail (29) which is fixed on the body and in which a sliding member (30) of the forward part (14) of the spoiler device (4) is mounted displaceably.

11. A motor vehicle according to Claim 10, **characterized in that** the guide rail (29) extending in the longitudinal direction of the vehicle has a U-shaped or C-shaped cross-section.

12. A motor vehicle according to Claim 10, **characterized in that** the sliding member (30) is formed by a rotatable roller (31).

13. A motor vehicle according to Claim 12, **characterized in that** the rotatable roller (31) is arranged on the underlying end of a projecting arm (32) of the forward part (14).

14. A motor vehicle according to Claim 13, **characterized in that** the projecting arms (32) are provided in a forward area of part (14) lying laterally on the outside.

15. A motor vehicle according to Claims 10 and 11, **characterized in that** the guide rail (29) has a forward end area (33) which is bent downwards in the manner of a radius and in which the sliding member (30) is situated in the retracted rest position (A) of the spoiler device (4).

16. A motor vehicle according to Claims 1 and 10, **characterized in that** a guide device (28) is provided on the two longitudinal sides of the spoiler device (4).

17. A motor vehicle according to Claim 1, **characterized in that** the guide device (28) is formed by an elongate slot opening which is provided on the body and into which a projecting pin - extending in the transverse direction - on part (14) engages.

## Revendications

1. Véhicule automobile, notamment pour passagers, comprenant un dispositif de ventilation (4) disposé dans la région arrière, qui peut être déplacé par un dispositif de réglage (5) entre une position de repos rentrée (A) et une position de fonctionnement sortie (B) disposée à distance de la carrosserie (2) située au-dessous, et inversement, caractérisé en ce que le dispositif de ventilation (4) est constitué dans la position de repos rentrée (A) par l'assemblage de deux parties (14, 15) reliées l'une à l'autre de façon articuiée et disposées, vues dans la direction longitudinale du véhicule, l'une à l'arrière de l'autre, qui s'étendent au moins en partie au ras de la surface externe des parties voisines (2, 12) de la carrosserie, la première partie (15) qui est située à l'arrière quand on la regarde dans la direction de la marche pouvant être pivotée par son extrémité inférieure libre (21) autour d'un axe de rotation fixe (22) alors que l'autre partie (14) du dispositif de ventilation (4) est montée de façon mobile dans un dispositif de guidage (28) orienté longitudinalement et monté sur la carrosserie, et en ce que dans la position de fonctionnement sortie (B), l'autre partie (14) qui est déplacée vers le haut et l'arrière s'appuie sur la première partie (15) qui a été pivotée vers l'arrière, l'autre partie (14) s'appuyant sur une surface limite supérieure (25) des sections latérales (24) de la première partie (15).

2. Véhicule automobile selon la revendication 1, caractérisé en ce que les deux parties (14, 15) forment des sections de relativement grande surface raccordées à la peau externe d'un capot arrière (9).

3. Véhicule automobile selon la revendication 1, caractérisé en ce que les deux parties (14, 15) sont entourées périphériquement par un cadre (12) du capot arrière (9).

4. Véhicule automobile selon la revendication 1, caractérisé en ce que l'autre partie (14) du dispositif de ventilation (4) qui est tournée vers la vitre arrière (6) comprend plusieurs jambes de force transversales.

5. Véhicule automobile selon la revendication 1, caractérisé en ce que la première partie (15) située à l'arrière est constituée par une section (35) s'étendant transversalement et deux sections latérales (24) disposées latéralement à l'extérieur et s'étendant dans la direction longitudinale du véhicule, les sections latérales (24) étant constituées de manière à servir de surfaces d'appui pour la partie avant (14) dans la position de fonctionnement sortie (B) et à fixer la position de fonctionnement (B).

6. Véhicule automobile selon la revendication 1, caractérisé en ce que la première partie (15) du dispositif de ventilation (4) qui est située à l'arrière est disposée en partie sous la partie avant (14).

7. Véhicule automobile selon la revendication 1, caractérisé en ce que la section de la première partie (15) qui est située sous la partie avant (14) est constituée sous forme d'un décrochement (23) en forme de gradin.

8. Véhicule automobile selon l'une des revendications 1 et 3, caractérisé en ce que la première partie (15) du dispositif de ventilation (4) qui est située à l'arrière est reliée à la carrosserie voisine (2) (cadre 12) par un axe de rotation (22) disposé horizontalement et s'étendant en direction transversale du véhicule.

9. Véhicule automobile selon la revendication 8, caractérisé en ce que le dispositif de réglage (5) du dispositif de ventilation (4) coopère avec l'axe de rotation (22).

10. Véhicule automobile selon la revendication 1, caractérisé en ce que le dispositif de guidage (28) destiné à la partie avant (14) est constitué par au moins un rail de guidage (29) fixé à la carrosserie, dans lequel un corps coulissant (30) de la partie avant (14) du dispositif de ventilation (4) est monté de façon mobile.

11. Véhicule automobile selon la revendication 10, caractérisé en ce que le rail de guidage (29) qui est orienté dans la direction longitudinale du véhicule a une section transversale en forme de U ou de C.

12. Véhicule automobile selon la revendication 10, caractérisé en ce que le corps coulissant (30) est formé par un galet rotatif (31).

13. Véhicule automobile selon la revendication 12, caractérisé en ce que le galet rotatif (31) est monté à l'extrémité inférieure d'un bras en saillie (32) de la partie avant (14).

14. Véhicule automobile selon la revendication 13, caractérisé en ce que le bras en saillie (32) est prévu dans une région avant et située latéralement de la partie (14).

15. Véhicule automobile selon les revendications 10 et 11, caractérisé en ce que le rail de guidage (29) comprend une région d'extrémité avant (33) de forme courbe et incurvée vers le bas, dans lequel se trouve le corps coulissant (30) dans la position de repos rentrée (A) du dispositif de ventilation.

16. Véhicule automobile selon les revendications 1 et 10, caractérisé en ce qu'un dispositif de guidage (28) est prévu sur les deux côtés longitudinaux du dispositif de ventilation (4).

17. Véhicule automobile selon la revendication 1, caractérisé en ce que le dispositif de guidage (18) est constitué par une ouverture en forme de fente longitudinale constituée dans la carrosserie, dans laquelle pénètre une tige en saillie de la partie (14) qui s'étend en direction transversale.
